# EUROPÄISCHE PATENTANMELDUNG

(11) **EP 3 493 091 A1**
(43) Veröffentlichungstag der Anmeldung: **05.06.2019**
(21) Anmeldenummer: 17205224.3
(22) Anmeldetag: 04.12.2017
(51) Int. Cl.: G06F 21/57, G06F 21/64, H04W 12/10, H04L 9/32

(54) **INTEGRITÄTSPRÜFUNG EINER VORRICHTUNG**

(71) Anmelder: Siemens Aktiengesellschaft, 80333 München (DE)
(72) Erfinder: Falk, Rainer, 85586 Poing (DE)

(57) **Zusammenfassung**

Die Erfindung betrifft ein Verfahren, eine erste Vorrichtung (1), eine zweite Vorrichtung (2), ein System und ein Computerprogrammprodukt zur rechnergestützten Prüfung einer ersten Vorrichtung (1) durch eine zweite Vorrichtung (2). Es wird mindestens ein Zustand der ersten Vorrichtung (1) gemessen. Zur Prüfung der Integrität der ersten Vorrichtung werden einer zweiten Vorrichtung (2) ein Integritätswert und eine Liste (L), die Messwerte und Messinformationen umfasst, bereitgestellt. Die Liste wird anhand von Berechtigungen, die festlegen, welche Messinformation die zweite Vorrichtung (2) über die erste Vorrichtung (1) erhält, ermittelt. Die zweite Vorrichtung (2) kann anhand der Liste (L) eine inhaltliche Prüfung der Konfiguration der ersten Vorrichtung (1) durchführen.

## Beschreibung

Die Erfindung betrifft ein Verfahren zur rechnergestützten Prüfung der Integrität und der Konfiguration einer ersten Vorrichtung durch eine zweite Vorrichtung, wobei eine Berechtigung festlegt, welche Information die zweite Vorrichtung über die erste Vorrichtung erhält.

Es ist bekannt, dass für ein erstes System, z.B. für einen Computer oder eine Anlage, eine Integritätsinformation bezüglich seiner Konfiguration ermittelt wird und diese gegenüber einem zweiten System bestätigt werden kann. Die Bestätigung der Integrität erfolgt hierbei kryptographisch geschützt und wird auch als Attestierung bezeichnet. Das erste System bestimmt und bestätigt somit seine Integrität und übermittelt diese Information an das zweite System. Dadurch kann das zweite System erkennen, ob das erste System sich in einem vertrauenswürdigen Zustand befindet, d.h. beispielsweise vertrauenswürdige Software geladen hat. Die Attestierung ist von vertrauenswürdigen Plattformmodulen, auch als Trusted Platform Modules TPM bezeichnet, bekannt und kann insbesondere von Linux Integrity Measurement Architecture, kurz IMA, umgesetzt werden.

Die Attestierung kann zum Beispiel für industrielle Datengateways genutzt werden. In einer industriellen Dateninfrastruktur oder englisch "Industrial Data Space", kurz IDS, können zwischen sogenannten IDS-Gateways Daten ausgetauscht werden. Dabei müssen sich die Datennutzer auf die Identität und Integrität der Datengeber und der Daten selbst verlassen können. Sowohl Datengeber als auch Datennutzer, d.h. jeweils ein IDS-Gateway, können nachweisen, dass der jeweilige Kommunikationspartner sich in einem vertrauenswürdigen Zustand befindet. Es soll die Vertrauenswürdigkeit eines jeweiligen anderen IDS-Gateways überprüfbar sein. Bekannte Anwendungen einer Attestierung gehen von einer Client-Server-Beziehung aus, d.h. ein Client bestätigt seine Integrität gegenüber einem als vertrauenswürdig angenommenen Server.

Es sind vertrauenswürdige Plattformmodule bekannt, die einen Computer oder ein Gerät um Sicherheitsfunktionen ergänzen. Mittels eines Plattformkonfigurationsregisters, auch als Platform Configuration Register PCR bezeichnet, die in einem vertrauenswürdigen Plattformmodul enthalten sind, kann die Systemintegrität erfasst werden. Dabei ist der Inhalt eines Plattformkonfigurationsregisters nur aktualisierbar, d.h. bei einer Messung eines Systemzustands wird ein Messwert gebildet und damit ein Wert des Plattformkonfigurationsregisters aktualisiert. Insbesondere wird der Plattformkonfigurationsregisterwert über eine kryptografische Einwegfunktion, z.B. eine kryptografische Hash-Funktion wie dem sicheren Hash-Algorithmus, auch als Secure-Hash-Algorithm bezeichnet, SHA-1 oder SHA-256, über einen Messwert, z.B. ein Hash-Wert einer Datei, gebildet. Die Attestierung, d.h. die Bestätigung der Integritätsmessung, beispielsweise durch eine digitale Signatur, wird vom vertrauenswürdigen Plattformmodul ausgestellt. Dabei wird der aktuelle Wert des Plattformkonfigurationsregisters bestätigt und kann einem zweiten System zur Prüfung bereitgestellt werden. Für die Prüfung der Bestätigung des Plattformkonfigurationsregisterwerts sind insbesondere alle eingegangenen Messwerte notwendig.

Für eine inhaltliche Prüfung oder Auswertung des Plattformkonfigurationsregisterwerts ist eine Information, wie der Wert, insbesondere die Messung, zustande kam, erforderlich. Diese zusätzliche Information, z.B. ein Dateiname oder eine Software, kann ebenfalls bereitgestellt werden. Zum Beispiel ist dies in Linux IMA umgesetzt.

Somit kann dem überprüfenden System eine detaillierte Information über die Konfiguration des ersten Systems und die Information über die Integrität übermittelt werden. Diese umfangreiche Informationsübergabe kann insbesondere bei industriellen Datennetzen unerwünscht sein, wenn z.B. einem Kommunikationspartner keine Information über installierte Software oder bestimmte Systemzustände bereitgestellt werden soll. Außerdem kann die genaue Kenntnis eines Systemzustands von Angreifern genutzt werden, um bekannte Schwachstellen z.B. von einer installierten Software auszunutzen.

Es stellt sich daher die Aufgabe, eine Möglichkeit zu finden, die Integrität einer Vorrichtung einer anderen Vorrichtung zu bestätigen und dort überprüfen zu können ohne vertrauliche Informationen preiszugeben.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein Verfahren zur rechnergestützten Prüfung einer ersten Vorrichtung durch eine zweite Vorrichtung, wobei
- in der ersten Vorrichtung mindestens ein Zustand der ersten Vorrichtung gemessen und mindestens ein Messwert und mindestens eine dem Messwert zugeordnete Messinformation erfasst wird,
- ein Integritätswert des mindestens einen Messwerts gebildet wird,
- der Integritätswert durch eine Vertrauenseinheit kryptografisch bestätigt wird,
- mindestens eine Berechtigung ermittelt wird, die festlegt, welche Messinformation die zweite Vorrichtung über die erste Vorrichtung erhält,
- die mindestens eine Berechtigung der ersten Vorrichtung bereitgestellt wird,
- der mindestens eine Messwert und die mindestens eine Messinformation in mindestens einer Liste eingetragen werden, wobei in die mindestens eine Liste lediglich die Messinformation mit einer Berechtigung aufgenommen wird,
- die mindestens eine Liste und der Integritätswert der zweiten Vorrichtung bereitgestellt wird
   und
- in der zweiten Vorrichtung anhand der mindestens einen Liste und dem Integritätswert die Integrität und/oder die Konfiguration der ersten Vorrichtung gegenüber einer Prüfinformation geprüft wird.

Dieses Verfahren ermöglicht es gegenüber einer zweiten Vorrichtung die Integrität der ersten Vorrichtung zu bestätigen und zu prüfen, wobei lediglich ein Teil der Messinformation über die Konfiguration der ersten Vorrichtung offengelegt wird. Es kann in einer ersten Vorrichtung mindestens ein Zustand gemessen werden, d.h. ein Messwert und dazugehörige Messinformation erfasst werden.

Ein Zustand einer Vorrichtung gibt insbesondere einen bestimmten, z.B. zu einem Zeitpunkt, gegebenen Konfigurationsstand der Soft- und/oder Hardware der Vorrichtung an. Dies kann beispielsweise das Vorhandensein einer installierten Software oder ein laufendes Betriebssystem sein.
Eine Messung eines Zustands kann beispielsweise durch eine Software erfolgen, welche einen Messwert zurückgibt. Der Messwert eines Zustands gibt das Ergebnis der Messung zurück. Die Messinformation zum Messwert umfasst beispielsweise Informationen zur Software, die die Messung durchführt. Der Messwert kann insbesondere als Hash-Wert einer Datei erfasst werden.

Die Prüfung der Integrität eines Systems ergibt beispielsweise, ob ein System in einem vertrauenswürdigen Zustand ist, z.B. einen bestimmten erforderlichen Virenscanner geladen haben. Die Integrität kann in einem Integritätswert beschrieben werden, welcher gegenüber einer Prüfinformation geprüft werden kann. Beispielsweise kann eine Prüfinformation einen vorbestimmten Wert umfassen mit dem der Integritätswert verglichen wird.

Die Konfiguration eines Systems umfasst beispielsweise zusätzliche Informationen über Zustände oder zu geladener Software. Um eine Konfiguration einer Vorrichtung zu prüfen, ist insbesondere die Messinformation notwendig. Der Integritätswert ist insbesondere nicht ausreichend, um Details der Konfiguration einer Vorrichtung zu ermitteln.

Eine Berechtigung kann beispielsweise in einer Datenstruktur erfasst sein. In der Berechtigung ist insbesondere angegeben, auf welche Informationen ein System zugreifen darf. In anderen Worten, eine Berechtigung legt fest, welche Informationen offengelegt und welche beschränkt werden.

Es wird über den Messwert des Zustands ein Integritätswert gebildet und beispielsweise mittels einer Vertrauenseinheit, z.B. einem vertrauenswürdigen Plattformmodul, kryptografisch bestätigt. Vorzugsweise ist die Vertrauenseinheit Teil der ersten Vorrichtung. Um diesen Integritätswert auch inhaltlich in der zweiten Vorrichtung überprüfen zu können, ist insbesondere mindestens eine Messinformation, die dem Messwert zugeordnet ist, notwendig. Beispielsweise kann die Messinformation eine Version einer Software oder einen Dateinamen enthalten. Diese Informationen können aber sensible Daten umfassen. Das erfindungsgemäße Verfahren erlaubt, eine Liste der Messwerte und Messinformationen derart zu erstellen, dass lediglich Messinformationen aufgenommen werden, für die die zweite Vorrichtung eine Berechtigung hat. Somit erhält die zweite Vorrichtung den Integritätswert der ersten Vorrichtung, dessen Bestätigung die zweite Vorrichtung prüfen kann, und eine gefilterte Liste von Messwerten und Messinformationen. Insbesondere werden alle Messwerte, aus denen der Integritätswert gebildet ist, und eine eingeschränkte Menge an dazugehöriger Messinformation übermittelt. Mit der Liste liegt der zweiten Vorrichtung die nötige Information vor, die Integrität der ersten Vorrichtung zu prüfen und eine inhaltliche Prüfung der Systemkonfiguration durchzuführen. Für die Prüfung der Integrität, d.h. des Integritätswerts, sind insbesondere alle Messwerte notwendig. Die inhaltliche Prüfung wird anhand der Messinformationen, für die die zweite Vorrichtung eine Berechtigung hat, durchgeführt. Hierbei kann somit lediglich ein Teil aller Messinformationen in der Liste aufgeführt werden. Beispielsweise kann eine zweite Vorrichtung damit überprüfen, ob die erste Vorrichtung eine bestimmte Software geladen hat.

Mittels des Verfahrens können sich beispielsweise Gateways gegenseitig die Integrität bestätigen und die Systemkonfiguration des Kommunikationspartners überprüfen. Bei einem firmenübergreifenden Datenaustausch kann dabei beispielsweise der Bedarf bestehen, dass nur bestimmte zulässige Informationen zu einer Systemkonfiguration einem Kommunikationspartner zur Verfügung gestellt werden sollen. Bei bekannten Lösungen aus dem Stand der Technik wird die gesamte Liste der Messinformationen übergeben. Nach dem vorliegenden Verfahren wird eine Liste mit Messwerten und Messinformationen übermittelt, welche lediglich berechtigte Messinformationen umfasst.

Unter "rechnergestütztem Verfahren" oder "rechnergestützten Prüfung" kann beispielsweise eine Implementierung des Verfahrens verstanden werden, bei dem insbesondere ein Prozessor mindestens einen Verfahrensschritt des Verfahrens ausführt. Ein Prozessor kann beispielsweise eine Maschine, auch virtuelle Maschine, oder eine elektronische Schaltung sein, insbesondere ein Hauptprozessor oder ein Mikroprozessor zusammen mit einer Speichereinheit zum Speichern von Programmcode der vom Prozessor ausgeführt werden kann.

In einer vorteilhaften Ausführungsform des Verfahrens, erfolgt ein Datenaustausch zwischen der ersten Vorrichtung und der zweiten Vorrichtung, wenn durch die Prüfung gegenüber einer Prüfinformation die Integrität und/oder die Konfiguration der ersten Vorrichtung validiert sind.

Wenn beispielsweise Gateways in einer industriellen Dateninfrastruktur untereinander Daten austauschen sollen, ist eine Integritäts- und Konfigurationsprüfung der beteiligten Gateways sinnvoll. Nach dem Verfahren wird ein Datenaustausch zwischen mindestens zwei Vorrichtungen, z.B. Gateways, erst realisiert, wenn die Prüfung der Integrität und/oder der Konfiguration der ersten Vorrichtung für gültig erklärt ist. Zum Beispiel ist dieses Verfahren vorteilhaft, wenn ein erster Kommunikationspartner Daten von einem zweiten Kommunikationspartner beziehen will, wobei die Systemkonfiguration, z.B. die Softwareversion des zweiten Kommunikationspartners, einer bestimmten Anforderung genügen soll. Folglich werden gegenüber einer Prüfinformation die Integrität und/oder die Konfiguration der ersten Vorrichtung geprüft. Beispielsweise kann dies eine Prüfung einer bestimmten Softwareversion sein, die auf der ersten Vorrichtung installiert ist.

In einer weiteren vorteilhaften Ausführungsform des Verfahrens, wird der mindestens eine Messwert anonymisiert, indem der Messwert abhängig von einer Nonce gebildet wird und die dem Messwert zugehörige Messinformation die Nonce umfasst.

Die Bildung eines Messwerts abhängig von einer Nonce, z.B. einem Zufallswert, ermöglicht, den Messwert zu anonymisieren. Eine Nonce ist insbesondere eine Zahlen- oder Buchstabenkombination, die lediglich ein einziges Mal verwendet wird. Es kann der Messwert mittels einer Hashfunktion gebildet werden, so dass die Hashfunktion auf die Nonce und die Messung angewendet wird, um den Messwert zu anonymisieren. Dies ist insbesondere vorteilhaft, da von vorliegenden Messwerten ohne entsprechende Messinformation, auf die Messung rückgeschlossen werden kann. So kann beispielsweise die zweite Vorrichtung anhand eines Messwerts installierte Software in der ersten Vorrichtung erkennen, selbst wenn keine Berechtigung für die entsprechende Messinformation vorliegt. Somit wird mittels der Nonce insbesondere ein anonymisierter Messwert erstellt. Die Nonce wird zusammen mit der Messinformation übermittelt, wenn für die Messinformation eine Berechtigung vorliegt. Ohne die Kenntnis der Nonce aus der Messinformation kann ein Nutzer vorzugsweise nicht praktikabel ermitteln, wie der Messwert zustande kam. Durch die Offenlegung der Nonce kann insbesondere der Messwert bestimmt werden. Die Prüfung der Integrität wird durch die Anonymisierung nicht beeinträchtigt. Der Integritätswert kann insbesondere über den anonymisierten Messwert gebildet werden.

In einer weiteren vorteilhaften Ausführungsform des Verfahrens wird der mindestens eine Messwert kryptografisch geschützt.

Die kryptografische Verschlüsselung eines Messwerts ist dahingehend vorteilhaft, dass beispielsweise in keiner einfachen Weise die Details der Messung offengelegt werden können. Beispielsweise ist es bei einer Übermittlung von verschlüsselten Messwerten nicht möglich, auf Systemkonfigurationen zu schließen, wenn die entsprechende Messinformation in der Liste aufgrund von beschränkten Berechtigungen nicht aufgenommen ist. Beispielsweise kann der Messwert nach dem Advanced Encryption Standard, kurz AES, verschlüsselt werden.

In einer weiteren vorteilhaften Ausführungsform des Verfahrens wird die mindestens eine Berechtigung abhängig von der zweiten Vorrichtung ermittelt.

Die Berechtigung legt fest, welche Information die zweite Vorrichtung über die erste Vorrichtung erhält. Anhand der Berechtigung werden die Liste der Messwerte und dazugehörige Messinformationen derart beschränkt, dass nur Messinformationen mit Berechtigung aufgelistet werden. Es kann vorteilhaft sein, die Berechtigung so zu bestimmen, dass sie abhängig von der zweiten Vorrichtung ist. Beispielsweise kann eine Berechtigung davon abhängig sein, in welchem Systemzustand sich die zweite Vorrichtung befindet oder welche Rechte die zweite Vorrichtung besitzt. Somit kann die Zusammensetzung der Liste vorzugsweise abhängig von einem Kommunikationspartner erfolgen, dem die Liste zur Verfügung gestellt wird. So kann beispielsweise ein Nutzer eine vollständige Liste von Messinformationen erhalten, wobei ein anderer Nutzer mit beschränkten Rechten eine entsprechend gefilterte Liste bereitgestellt bekommt.

In einer weiteren vorteilhaften Ausführungsform des Verfahrens wird die mindestens eine Berechtigung anhand einer Vertrauenswürdigkeitsinformation ermittelt.

Es kann beispielsweise eine Vertrauenswürdigkeitsinformation, die z.B. anhand eines Zertifikats der zweiten Vorrichtung ermittelt wird, für die Ermittlung der Berechtigung herangezogen werden. Als Vertrauenswürdigkeitsinformation kann z.B. in einem Zertifikat angegeben sein, ob die Vorrichtung zertifiziert ist und zu welcher Sicherheitsstufe. Davon abhängig können beispielsweise die Messungen als Teilmenge bereitgestellt werden.

In einer weiteren vorteilhaften Ausführungsform des Verfahrens wird die mindestens eine Berechtigung anhand des Inhalts mindestens einer Messung eines Zustands der ersten Vorrichtung ermittelt.

Es kann eine zweite Vorrichtung, z.B. ein Kommunikationsknoten, eine bestimmte Messung anfordern, um einen bestimmten Konfigurationszustand der ersten Vorrichtung zu prüfen. Es kann die erste Vorrichtung aber auch angeben, welche Art von Messungen sie zur Verfügung stellt, d.h. welcher Inhalt beispielsweise geteilt werden darf. Abhängig von der Art der Messung oder ihrem Inhalt wird eine Berechtigung ermittelt. Beispielsweise können lediglich Messungen, d.h. mindestens ein Integritätswert und mindestens eine entsprechende Messinformation, bereitgestellt werden, die eine bestimmte Konfiguration der ersten Vorrichtung betreffen. Insbesondere kann angegeben werden, dass gewissen Daten nur bereitgestellt werden, wenn eine vorgegebene Anzahl von Messungen vorliegt und durch eine Attestierung bestätigt ist.

In einer weiteren vorteilhaften Ausführungsform des Verfahrens wird die mindestens eine Berechtigung für die Messungen mindestens eines Zustands ermittelt, für die der Integritätswert kryptografisch bestätigt ist.

Beispielsweise können lediglich ein Integritätswert und eine Liste von Messinformation von Messungen bereitgestellt werden, für die der Integritätswert von der Vertrauenseinheit des ersten Systems kryptografisch bestätigt ist. Dies ist insbesondere für vertrauliche Daten vorteilhaft.

In einer weiteren vorteilhaften Ausführungsform des Verfahrens erkennt die zweite Vorrichtung Schwachstellen der ersten Vorrichtung anhand des Integritätswerts und/oder der Liste.

Mittels der Prüfung der Integrität und/oder Konfiguration der ersten Vorrichtung kann erkannt werden, ob sich die Vorrichtung in einem vertrauenswürdigen Zustand befindet. Darüber hinaus können Schwachstellen durch die Prüfung der Konfiguration erkannt werden, z.B. ob veraltete Software geladen ist. Wenn dies von der zweiten Vorrichtung erkannt wird, kann die Prüfung der Integrität und/oder Konfiguration nicht validiert werden.

Ein weiterer Aspekt der Erfindung betrifft eine erste Vorrichtung, umfassend:
- eine Messeinheit, die derart ausgebildet ist, mindestens einen Zustand der ersten Vorrichtung zu messen und mindestens einen Messwert und mindestens eine dem Messwert zugeordnete Messinformation zu erfassen,
- eine Bereitstellungseinheit, die derart ausgebildet ist, einen Integritätswert des mindestens einen Messwerts zu bilden,
- eine Vertrauenseinheit, die derart ausgebildet ist, den Integritätswert kryptografisch zu bestätigen,
- eine Verwaltungseinheit, die derart ausgebildet ist, den mindestens einen Messwert und die mindestens eine Messinformation in mindestens eine Liste einzutragen, wobei lediglich Messinformation mit einer Berechtigung aufgenommen wird,
- eine Übermittlungseinheit, die derart ausgebildet ist, die mindestens eine Liste und den Integritätswert einer zweiten Vorrichtung bereitzustellen.

Die erste Vorrichtung ist dahingehend vorteilhaft, da sie erlaubt einen Integritätswert und eine gefilterte Liste von Messwerten einer zweiten Vorrichtung bereitzustellen. Somit kann eine zweite Vorrichtung, die nur beschränkte Berechtigungen hat, die Integrität einer ersten Vorrichtung prüfen; erhält aber insbesondere dabei nur eingeschränkten Einblick in die Konfiguration der ersten Vorrichtung anhand der beschränkten Liste von Messinformationen. Die Vertrauenseinheit führt die Attestierung des Integritätswerts durch, d.h. bestätigt den Integritätswert kryptografisch.

In einer vorteilhaften Ausführungsform ist die erste Vorrichtung als Software-Implementierung oder als Hardware-Komponente realisiert und ist derart ausgebildet, das oben beschriebene Verfahren auszuführen.

Beispielsweise kann in einer ersten Vorrichtung, z.B. ein Gateway, eine Software die Attestierung und die Messinformation bereitstellen. Die Vertrauenseinheit, z.B. ein vertrauenswürdigen Plattformmodul, kann als Hardware-Chip, als Firmware eines vertrauenswürdigen Plattformmoduls oder als virtuelles vertrauenswürdiges Plattformmodul realisiert sein. Auch ist es möglich, dass die Funktionalität der Vertrauenseinheit der ersten Vorrichtung eine Applikation des Betriebssystems ist.

Ein weiterer Aspekt der Erfindung betrifft eine zweite Vorrichtung, umfassend:
- eine Empfangseinheit, die derart ausgebildet ist, die mindestens eine Liste und den einen Integritätswert einer ersten Vorrichtung zu empfangen
   und
- eine Prüfeinheit, die derart ausgebildet ist, anhand mindestens einer Liste, die mindestens eine Messinformation und mindestens einen Messwert umfasst, und einem Integritätswert die Integrität und/oder Konfiguration einer ersten Vorrichtung gegenüber einer Prüfinformation zu prüfen.

Eine zweite Vorrichtung kann vorzugsweise die Integrität und/oder Konfiguration einer ersten Vorrichtung prüfen. Dies erlaubt beispielsweise vor einem Datenaustausch sicherzustellen, dass die erste Vorrichtung sich in einem vertrauenswürdigen Zustand befindet. Weiterhin ist es beispielsweise möglich, dass die zweite Vorrichtung abhängig von dem Ergebnis der Prüfung der Integrität und/oder Konfiguration der ersten Vorrichtung ermittelt, ob ein Datenaustausch eines bestimmten Dateninhalts bzw. einer bestimmten Dateninhaltsart zulässig ist. So kann beispielsweise abhängig von der Prüfung ermittelt werden, ob der Datenaustausch von als "vertraulich" bzw. von als "intern" eingestuften Daten jeweils zulässig ist, wobei "vertrauliche" Daten eine höhere Sicherheitsstufe als "intern" aufweisen. Dazu kann es beispielsweise erforderlich sein, dass für einen Datenaustausch von als "intern" eingestuften Daten zumindest die Messinformation zu bestimmten vorgegebenen Messungen bereitgestellt werden muss und die Prüfung der Messinformation ergibt, dass die Integrität und/oder Konfiguration der ersten Vorrichtung für den Austausch von als "intern" eingestuften Daten zulässig ist. Wenn "vertraulich" eingestufte Daten ausgetauscht werden, müssen z.B. weitere Messwerte und Messinformationen bereitgestellt werden, oder es erfolgen stringentere Prüfungen der bereitgestellten Messungen. So kann z.B. bei "intern" gefordert sein, dass verfügbare Sicherheits-Patche nach einem vorgegebenen Zeitraum eingespielt sein müssen. Dagegen müssen für "vertraulich" die verfügbaren Sicherheits-Patche bereits nach einem kürzeren Zeitrauem eingespielt sein.

Ein weiterer Aspekt der Erfindung betrifft ein System umfassend eine erste Vorrichtung und eine zweite Vorrichtung, die miteinander über eine Kommunikationsverbindung verbunden sind, wobei das System derart ausgebildet ist, die Schritte des Verfahrens durchzuführen.

Beispielsweise kann solch ein System als Peer-to-Peer-Szenario verstanden werden, bei dem zwei Vorrichtungen, z.B. zwei Gateways, sich gegenseitig die Integrität kryptografisch bestätigen und die Systemkonfiguration überprüfen. Es ist beispielsweise auch möglich, dass nur eines der beiden Gateways dem anderen seine Integrität kryptographisch bestätigt.

Ein weiterer Aspekt der Erfindung betrifft ein Computerprogrammprodukt, das direkt in einen programmierbaren Computer oder Prozessor ladbar ist, umfassend Programmcodeteile, die dazu geeignet sind, die Schritte des Verfahrens durchzuführen.

Ausführungsbeispiele des erfindungsgemäßen Verfahrens, der ersten Vorrichtung, der zweiten Vorrichtung und des Systems sind in den Zeichnungen beispielhaft dargestellt und werden anhand der nachfolgenden Beschreibung näher erläutert. Es zeigen:
- Fig. 1: ein Ablaufdiagramm des erfindungsgemäßen Verfahrens zur rechnergestützten Prüfung einer ersten Vorrichtung durch eine zweite Vorrichtung;
- Fig. 2: eine schematische Darstellung einer erfindungsgemäßen Liste von Messwerten und Messinformationen;
- Fig. 3: eine schematische Darstellung eines Ausführungsbeispiels der erfindungsgemäßen ersten Vorrichtung;
- Fig. 4: eine schematische Darstellung eines Ausführungsbeispiels der erfindungsgemäßen zweiten Vorrichtung; und
- Fig. 5: eine schematische Darstellung eines Ausführungsbeispiels des erfindungsgemäßen Systems zum Durchführen des Verfahrens.

Einander entsprechende Teile sind in allen Figuren mit den gleichen Bezugszeichen versehen.

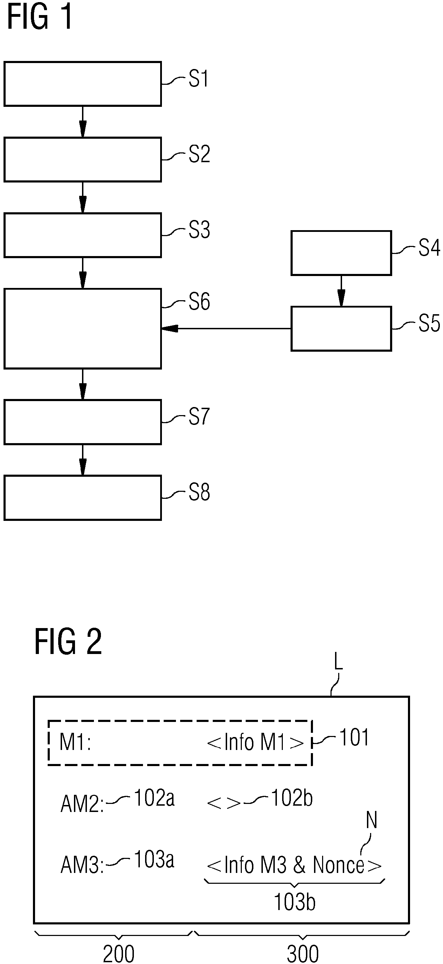

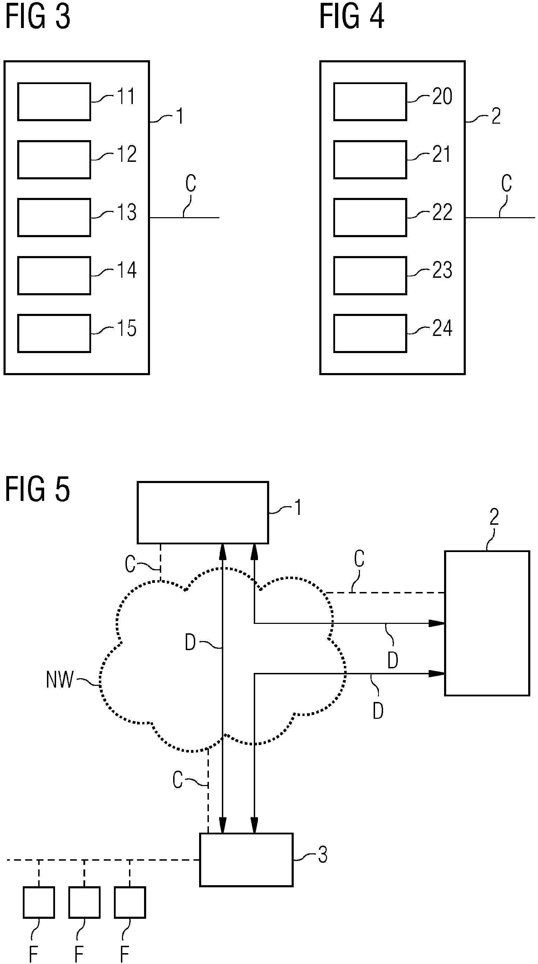

Figur 1 zeigt ein Ablaufdiagramm des erfindungsgemäßen Verfahrens zur rechnergestützten Prüfung einer ersten Vorrichtung 1 durch eine zweite Vorrichtung 2, jeweils in Figur 3 und 4 dargestellt, mit den folgenden Verfahrensschritten:

Im ersten Schritt S1 wird in der ersten Vorrichtung 1 mindestens ein Zustand der ersten Vorrichtung 1 gemessen. Es kann beispielsweise beim Booten eines Rechners gemessen werden, ob bestimmte Software installiert ist, d.h. welche Software bzw. welche Softwaremodule beim Booten geladen werden. Bei der Messung werden mindestens ein Messwert und eine dem Messwert zugeordnete Messinformation erfasst. Der Messwert wird mittels einer Einwegfunktion, wie z.B. einer kryptographischen Hash-Funktion, gebildet. Der Messwert wird als Hash-Wert beispielsweise einer Datei bestimmt. Dabei kann die Hash-Funktion beispielsweise auf den eigentlichen Dateiinhalt und optional auf weitere Dateiinformationen, insbesondere den Dateinamen bzw. den Dateipfad, angewandt werden. Die Messinformation kann beispielsweise eine Information über den Dateinamen bzw. den Dateipfad der Datei oder ein in der ersten Vorrichtung 1 geladenes Programm enthalten, welches für die Messung benutzt wird. Des Weiteren kann eine Anonymisierung der Messwerte durchgeführt werden. Dazu wird ein Messwert abhängig von einer Nonce, z.B. einer Zufallszahl, gebildet. Es kann die Nonce als Teil der Messinformation übermittelt werden, so dass die Anonymisierung aufgehoben werden kann. In einer anderen Variante wird der Messwert kryptografisch verschlüsselt. Durch Bereitstellen des verwendeten Schlüssels kann die Verschlüsslung des Messwerts aufgehoben werden.

Im nächsten Schritt S2 wird ein Integritätswert des mindestens einen Messwerts gebildet. Dies wird in einer Bereitstellungseinheit 12 der ersten Vorrichtung 1, beispielsweise in einem Plattformkonfigurationsregister, durchgeführt. Es wird somit ein Integritätswert, vorzugsweise über eine Hash-Funktion, bestimmt. Dieser Integritätswert umfasst folglich Information über einen bestimmten Systemzustand der ersten Vorrichtung 1. In anderen Worten, der Integritätswert entspricht einem Zustandsbild oder einer Momentaufnahme der Konfiguration von Software und/oder Hardware der ersten Vorrichtung 1. Der Integritätswert wird vorzugsweise rekursiv über eine Mehrzahl oder eine Vielzahl von Messwerten gebildet.

Im folgenden Schritt S3 wird der Integritätswert in der ersten Vorrichtung 1 bestätigt. Dies bedeutet, dass die erste Vorrichtung 1 die ermittelte Integritätsinformation kryptografisch geschützt durch eine Vertrauenseinheit 13 bestätigt. Beispielsweise kann die Vertrauenseinheit 13 ein vertrauenswürdiges Plattformmodul sein, das die Bestätigung durchführt. Diese Bestätigung, auch als Attestierung bezeichnet, ist vorzugsweise digital signiert.

Es kann die Situation vorliegen, dass die zweite Vorrichtung 2 nicht die nötigen Rechte besitzt, Detailinformationen über die Konfiguration der ersten Vorrichtung 1 zu erfahren. Um den Integritätswert aber auch inhaltlich zu prüfen, sind Details über die Messungen, d.h. wie z.B. diese zustande kamen, notwendig. Es sind folglich die Messinformationen zu den Messwerten notwendig.

Es wird in Schritt S4 mindestens eine Berechtigung ermittelt, die festlegt, welche Messinformation die zweite Vorrichtung 2 über die erste Vorrichtung 1 erhält. Beim Schritt S5 wird diese Berechtigung der ersten Vorrichtung 1 bereitgestellt. Beispielsweise wird die Berechtigung abhängig von der zweiten Vorrichtung 2, z.B. deren Systemzustand, oder anhand einer Vertrauenswürdigkeitsinformation oder abhängig von der Art oder dem Inhalt der Messung oder lediglich, wenn der Integritätswert bestätigt ist, bestimmt.

Im nächsten Schritt S6 wird mindestens eine Liste erstellt, die die ermittelten Messwerte und zugeordneten Messinformationen umfasst. Es werden insbesondere lediglich Messinformationen eingetragen, die nach der Berechtigung zulässig sind. Somit wird erreicht, dass die zweite Vorrichtung 2 lediglich Messinformationen erhält, für die sie auch berechtigt ist.

Es können auch mehr als eine Liste erstellt werden. Beispielsweise werden mehrere Listen mit Messwerten und Messinformationen gebildet, die jeweils unterschiedliche Informationen gemäß bestimmter Berechtigungen umfassen.

Anschließend wird im Schritt S7 die mindestens eine Liste und der Integritätswert der zweiten Vorrichtung 2 bereitgestellt. In der zweiten Vorrichtung 2 wird im Schritt S8 anhand der mindestens einen Liste und dem Integritätswert die Integrität und/oder die Konfiguration der ersten Vorrichtung 1 gegenüber einer Prüfinformation geprüft. Die zweite Vorrichtung 2 erhält somit den Integritätswert, der in der ersten Vorrichtung 1 bestätigt wurde, und prüft die Gültigkeit gegenüber z.B. einem vorbestimmten Prüfwert. Damit kann überprüft werden, ob sich die erste Vorrichtung in einem erwarteten Zustand befindet. Um den Integritätswert auch inhaltlich zu prüfen, d.h. beispielsweise Details über die Konfiguration einer Vorrichtung zu erfahren, ist die Liste der Messwerte und Messinformationen notwendig. Die Messinformationen umfassen beispielsweise Informationen über installierte Software, Versionsnummern von Software oder Systemzustände. Insbesondere ist es notwendig, dass alle Messwerte vorliegen, um die Attestierung oder Bestätigung des Integritätswerts zu überprüfen. Für die inhaltliche Überprüfung des Integritätswerts ist die Messinformation notwendig.

Figur 2 zeigt schematisch den Aufbau eines Ausführungsbeispiels einer Liste L von Messwerten und Messinformationen, beispielsweise jeweils in einer Spalte aufgelistet, die in der ersten Vorrichtung 1 erstellt wird. In der ersten Vorrichtung 1 wird, abhängig von den zuvor bestimmten Berechtigungen, mindestens eine Liste L erstellt. Hier ist eine Liste L mit beispielhaften Einträgen gezeigt. Diese umfasst alle Messwerte 200 von Messungen mindestens eines Systemzustands und Messinformationen 300 zu diesen Messungen. Es können alle Messwerte und insbesondere Messinformationen, für die eine Berechtigung vorliegt, in der Liste L eingetragen werden. Der erste Eintrag 101 der Liste L zeigt beispielhaft eine detaillierte Information, zu der sowohl der Messwert als auch die Messinformation dazu vorliegt und nicht anonymisiert ist. Die zweite Vorrichtung 2 hat in diesem Fall die Berechtigung, den Messwert, der in die Berechnung des Integritätswerts eingeht, und eine dem Messwert zugeordnete Messinformation zu erhalten.

Des Weiteren werden in Abhängigkeit von eingeschränkten Berechtigungen Messinformationen in die Liste L eingetragen. Beispielsweise zeigt der zweite Eintrag 102b keine Messinformation zum Messwert 102a, wenn hierfür keine Berechtigung vorliegt. Außerdem ist gezeigt, dass der Messwert 102a in anonymisierter Form vorliegt. Beispielsweise kann bei der Bildung des Messwerts mittels einer Einwegfunktion eine Nonce, z.B. eine Zufallszahl, benutzt werden und/oder der Messwert 102a ist durch eine kryptografische Verschlüsselung geschützt. Der dritte Eintrag der Liste weist ebenfalls einen anonymisierten Messwert 103a auf, doch die Messinformation 103b ist in der Liste enthalten und umfasst die Nonce N, welche in die Berechnung des anonymisierten Messwerts 103a eingegangen ist. Somit liegen für den ersten und den dritten Eintrag 101 und 103a, 103b alle Informationen vor, um in der zweiten Vorrichtung 2 die jeweilige Messung inhaltlich zu überprüfen. Beim zweiten Eintrag kann keine inhaltliche Überprüfung stattfinden, da die Messinformation 102b nicht in der Liste L aufgenommen ist. Trotzdem kann die zweite Vorrichtung 2 mittels dieser Liste L die Integritätsattestierung, d.h. die Bestätigung des Integritätswerts, der ersten Vorrichtung 1 überprüfen, da alle dafür notwendigen Messwerte 200 vorliegen.

Alternativ zu einer derart gefilterten Liste L können auch mehrere Listen gebildet werden, die unterschiedliche Einträge, z.B. abhängig von verschiedenen Berechtigungen, umfassen. Beispielsweise kann für die Kommunikation zwischen verschiedenen Gateways verschiedene gefilterte Listen gebildet werden, so dass zwar die Integritätsüberprüfung einer ersten Vorrichtung 1 jeweils möglich ist, aber eine inhaltliche Prüfung nur für die jeweils beschränkte Menge an Messungen durchführbar ist. Beispielsweise können verschiedene Listen abhängig vom Inhalt der Messungen gebildet werden.

Figur 3 zeigt in schematischer Darstellung eine erste Vorrichtung 1. Beispielsweise kann dies ein IDS-Gateway sein, welches gegenüber einem anderen IDS-Gateway seine Integrität bestätigen kann. Eine erste Vorrichtung 1 umfasst eine Messeinheit 11, eine Bereitstellungseinheit 12, eine Vertrauenseinheit 13, eine Verwaltungseinheit 14 und eine Übermittlungseinheit 15, die jeweils miteinander verbunden sind. Die erste Vorrichtung 1 umfasst insbesondere eine Kommunikationsverbindung C, z.B. zur Verbindung mit einem Netzwerk NW. Des Weiteren, insbesondere wenn es sich bei der ersten Vorrichtung 1 um ein IDS-Gateway handelt, können weitere Software- und Hardwarekomponenten vorliegen, wie z.B. ein Betriebssystem, das die IDS-Gateway-Software ausführt, eine Recheneinheit oder Prozessor, ein Arbeitsspeicher, ein nichtflüchtiger Speicher und verschiedene Applikationen. Im Speicher können beispielsweise Industriedaten vorliegen, die von Feldgeräten erfasst wurden oder von einem anderen IDS-Gateway bereitgestellt wurden. Diese Daten können beispielsweise über eine industrielle Dateninfrastruktur ausgetauscht werden.

Beispielsweise stellt eine Übermittlungseinheit 15 eine Attestierung und Messinformation zu einem IDS-Gateway, hier die erste Vorrichtung 1, bereit. Dazu werden in der Messeinheit 11 Messungen von Zuständen der ersten Vorrichtung 1 durchgeführt und in Messwerten und Messinformationen erfasst. Die Messinformation kann z.B. vom Betriebssystem und/oder einer IDS-Gateway-Software erfasst werden. Eine Bereitstellungseinheit 12 bildet den Integritätswert mindestens eines Messwerts. Die Bereitstellungseinheit 12 kann beispielsweise ein Plattformkonfigurationsregister eines vertrauenswürdigen Plattformmoduls sein und über eine Hash-Funktion den Integritätswert aus dem mindestens einen Messwert ermitteln. Der Integritätswert wird von einer Vertrauenseinheit 13, z.B. einem vertrauenswürdigen Plattformmodul, bestätigt. Die Vertrauenseinheit 13 kann dabei als Hardware-Chip, als Firmware-Komponente oder als virtuelle Komponente realisiert sein.

Auch ist es möglich, dass eine Funktionalität eines vertrauenswürdigen Plattformmoduls für die Gateway-Integritätsbestätigung eine Applikation im Benutzerraum des Betriebssystems ist. Dies ist vorteilhaft, da die Integritätsbestätigung, die von anderen Gateways bereitgestellt wird, unabhängig von einem herkömmlichen vertrauenswürdigen Plattformmodul ist. Ein herkömmliches vertrauenswürdiges Plattformmodul ist auf einer Rechner-Plattform allgemein verfügbar, ist jedoch teilweise für spezielle Betriebssysteminterne Zwecke vorgesehen und somit gegebenenfalls für eine Nutzung für eine Peer-to-Peer-Integritätsbestätigung zwischen Gateways nicht nutzbar. Auch ist ein vertrauenswürdiges Plattformmodul auf eingebetteten Systemen oft nicht verfügbar.

Die Vorrichtung 1 ist über eine Kommunikationsverbindung C mit anderen Vorrichtungen verbindbar. In einer Verwaltungseinheit 14 wird mindestens eine Liste der Messwerte und Messinformationen erstellt. Über die Übermittlungseinheit 15 können der Integritätswert und die Liste einer zweiten Vorrichtung 2, z.B. über die Kommunikationsverbindung C, zur Verfügung gestellt werden. Es werden alle Messwerte in die Liste aufgenommen. Die Messwerte können anonymisiert oder kryptografisch verschlüsselt vorliegen. Es werden lediglich Messinformationen in die Liste aufgenommen, für die eine Berechtigung vorliegt. Die Berechtigung wird der ersten Vorrichtung 1 bereitgestellt. Beispielsweise kann die Berechtigung abhängig von der zweiten Vorrichtung 2, an die die Information übermittelt wird, bestimmt werden.

Alternativ kann die Berechtigung anhand einer Vertrauenswürdigkeitsinformation ermittelt werden, die beispielsweise abhängig von einem Zertifikat der zweiten Vorrichtung 2 ermittelt wird. Es kann z.B. in einem Zertifikat angegeben sein, ob ein Kommunikationsknoten zertifiziert ist und welche Sicherheitsstufe die Zertifizierung hat. Abhängig davon können unterschiedliche Teilmengen von Messungen bereitgestellt bzw. in den Messinformationen aufgelöst werden. So kann z.B. einem Gateway mit geringer Zertifizierung keine Attestierungsinformation, d.h. ein bestätigter Integritätswert, und keine Messungen bereitgestellt werden, wohingegen einem hoch zertifizierten Gateway eine Attestierung und eine durch die Berechtigung bestimmte Liste an Messinformationen bereitgestellt wird.

Außerdem kann beim Verbindungsaufbau zwischen einer ersten Vorrichtung 1 und einem anderen Kommunikationsknoten ausgehandelt werden, welche Berechtigungen ermittelt werden. Dazu kann ein Kommunikationsknoten mitteilen, welche Messungen er anfordert, d.h. welche Messungen mit bestimmtem Inhalt der ersten Vorrichtung 1 er prüfen möchte. Weiterhin kann eine erste Vorrichtung 1 festlegen, welche Art von Messungen bereitgestellt werden dürfen. Es kann beispielsweise angegeben werden, dass gewisse Daten, wie z.B. vertrauliche Konfigurationsdaten, nur bereitgestellt werden, wenn eine vorgegebene Anzahl von Messungen vorliegt und durch eine Attestierung bestätigt ist. Andere, weniger kritische Daten können dagegen ohne Attestierung oder bei einer Attestierung einer Basismenge von Messungen bereitgestellt werden.

Die Aushandlung der Berechtigungen kann beispielsweise bei Verbindungsaufbau oder bei der Durchführung eines Datenaustausches erfolgen. Es kann folglich beispielsweise beim Verbindungsaufbau eine Attestierung bereitgestellt werden, wobei die detaillierte Liste mit Messinformationen der Messungen aber erst bei einem tatsächlichen Datenaustausch übermittelt wird, z.B. abhängig von den ausgetauschten Daten. Dabei ist es möglich, dass Meta-Informationen eines Datensatzes spezifizieren, welche Messungen bestätigt vorliegen sollen oder welche Messinformationen zulässig sind. In einer Variante können die Meta-Informationen eines Datensatzes dessen Sicherheitseinstufung (Security Label) oder Sicherheitskennzeichen festlegen und so z.B. als "intern" oder "vertraulich" kennzeichnen. Abhängig von einer Sicherheitseinstufung (Security Label) kann spezifiziert sein, welche Messungen bestätigt vorliegen sollen oder welche Messinformationen zulässig sind.

Figur 4 zeigt schematisch ein Beispiel der zweiten Vorrichtung 2. Eine zweite Vorrichtung 2 kann beispielsweise ein Gateway sein, welches Daten mit einer ersten Vorrichtung 1, z.B. einem anderen Gateway austauschen will. Dazu kann insbesondere eine gegenseitige Integritätsprüfung durchgeführt werden. Die zweite Vorrichtung 2 umfasst eine Empfangseinheit 20 und eine Prüfeinheit 21. Die Empfangseinheit 20 kann mindestens eine Liste, die Messinformation und Messwerte umfasst, und einen Integritätswert von einer ersten Vorrichtung 1 empfangen. Die Prüfeinheit 21 kann anhand der Liste und dem Integritätswert die Integrität und Konfiguration einer ersten Vorrichtung 1 gegenüber einer Prüfinformation prüfen. Des Weiteren kann die zweite Vorrichtung 2 vorzugsweise eine Recheneinheit 22, einen Speicher 23 und ein Betriebssystemeinheit 24 umfassen. Die zweite Vorrichtung 2 kann insbesondere auch ein vertrauenswürdiges Plattformmodul enthalten, um seine Integrität gegenüber einer anderen Vorrichtung zu bestätigen. Die zweite Vorrichtung 2 ist beispielsweise mit einer Kommunikationsverbindung C mit einem Netzwerk NW verbunden.

Insbesondere kann die zweite Vorrichtung 2 auch Einheiten der erfindungsgemäßen Vorrichtung 1 umfassen. Ebenso kann die erste Vorrichtung 1 auch eine Prüfeinheit 21 umfassen. Im beispielhaften Fall, bei dem Gateways sich gegenseitig die Integrität bestätigen und überprüfen, ist eine derartige Ausführungsform vorteilhaft. In anderen Worten, die genannten Einheiten der ersten und der zweiten Vorrichtung 1,2 können jeweils auch in der anderen Vorrichtung vorhanden sein, so dass eine wechselseitige Prüfung möglich ist. Das erfindungsgemäße System umfasst insbesondere die jeweiligen Einheiten der ersten und zweiten Vorrichtung 1,2.

Figur 5 zeigt ein Ausführungsbeispiel des Systems zur Durchführung des Verfahrens mit mehreren Vorrichtungen, z.B. Gateways 1,2 und 3, die über Kommunikationsverbindungen C mit einem Netzwerk NW verbunden sind. Hierbei stellen sich jeweils zwei Gateways gegenseitig eine Integritätsinformation bereit. Die Integritätsinformation besteht aus einer Attestierung, d.h. eine kryptografisch geschützte Bestätigungsinformation zumindest eines Zustands, und mindestens einer Messinformation, die angibt, wie der bestätigte Zustand gemessen wurde. Die Bestätigungsinformation ist vorzugsweise digital signiert und umfasst beispielsweise eine Nonce zur Anonymisierung der Messung. Bei erfolgreicher Prüfung der Integrität und der Konfiguration des jeweiligen Gateways 1, 2 oder 3, kann ein Datenaustausch D erfolgen. Im gezeigten Beispiel ist das dritte Gateway 3 mit einem Automatisierungsnetzwerk NW bestehend aus mehreren Feldgeräten F verbunden. Daten dieser Feldgeräte F können beispielsweise mit anderen Gateways 1, 2 ausgetauscht werden. Wenn die Prüfung der Integritätsbestätigung im ersten Gateway 1 oder im zweiten Gateway 2 erfolgreich ist, können mit diesen Gateways Daten ausgetauscht werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur rechnergestützten Prüfung einer ersten Vorrichtung (1) durch eine zweite Vorrichtung (2), wobei
- in der ersten Vorrichtung (1) mindestens ein Zustand der ersten Vorrichtung (1) gemessen und mindestens ein Messwert und mindestens eine dem Messwert zugeordnete Messinformation erfasst wird (S1),
- ein Integritätswert des mindestens einen Messwerts gebildet wird (S2),
- der Integritätswert durch eine Vertrauenseinheit (12) kryptografisch bestätigt wird (S3),
- mindestens eine Berechtigung ermittelt wird, die festlegt, welche Messinformation die zweite Vorrichtung (2) über die erste Vorrichtung erhält (S4),
- die mindestens eine Berechtigung der ersten Vorrichtung (1) bereitgestellt wird (S5),
- der mindestens eine Messwert und die mindestens eine Messinformation in mindestens einer Liste eingetragen werden (S6), wobei in die mindestens eine Liste lediglich die Messinformation mit einer Berechtigung aufgenommen wird,
- die mindestens eine Liste und der Integritätswert der zweiten Vorrichtung (2) bereitgestellt wird (S7)
und
- in der zweiten Vorrichtung (2) anhand der mindestens einen Liste und dem Integritätswert die Integrität und/oder die Konfiguration der ersten Vorrichtung (1) gegenüber einer Prüfinformation geprüft wird (S8).

2. Verfahren nach Anspruch 1, wobei ein Datenaustausch (D) zwischen der ersten Vorrichtung (1) und der zweiten Vorrichtung (2) erfolgt, wenn durch die Prüfung gegenüber einer Prüfinformation die Integrität und/oder die Konfiguration der ersten Vorrichtung (1) validiert sind.

3. Verfahren nach einem der vorangehenden Ansprüche, wobei der mindestens eine Messwert anonymisiert wird, indem der Messwert abhängig von einer Nonce gebildet wird und die dem Messwert zugehörige Messinformation die Nonce umfasst.

4. Verfahren nach einem der vorangehenden Ansprüche, wobei der mindestens eine Messwert kryptografisch geschützt wird.

5. Verfahren nach einem der vorangehenden Ansprüche, wobei die mindestens eine Berechtigung abhängig von der zweiten Vorrichtung (2) ermittelt wird.

6. Verfahren nach einem der Ansprüche 1 bis 4, wobei die mindestens eine Berechtigung anhand einer Vertrauenswürdigkeitsinformation ermittelt wird.

7. Verfahren nach einem der Ansprüche 1 bis 4, wobei die mindestens eine Berechtigung anhand des Inhalts mindestens einer Messung eines Zustands der ersten Vorrichtung (1) ermittelt wird.

8. Verfahren nach einem der Ansprüche 1 bis 4, wobei die mindestens eine Berechtigung für die Messungen mindestens eines Zustands ermittelt wird, für die der Integritätswert kryptografisch bestätigt ist.

9. Verfahren nach einem der vorangehenden Ansprüche, wobei die zweite Vorrichtung (2) Schwachstellen der ersten Vorrichtung (1) anhand des Integritätswerts und/oder der Liste erkennt.

10. Erste Vorrichtung (1) umfassend:
- eine Messeinheit (11), die derart ausgebildet ist, mindestens einen Zustand der ersten Vorrichtung (1) zu messen und mindestens einen Messwert und mindestens eine dem Messwert zugeordnete Messinformation zu erfassen,
- eine Bereitstellungseinheit (12), die derart ausgebildet ist, einen Integritätswert des mindestens einen Messwerts zu bilden,
- eine Vertrauenseinheit (13), die derart ausgebildet ist, den Integritätswert kryptografisch zu bestätigen,
- eine Verwaltungseinheit (14), die derart ausgebildet ist, den mindestens einen Messwert und die mindestens eine Messinformation in mindestens eine Liste einzutragen, wobei lediglich Messinformation mit einer Berechtigung aufgenommen wird,
- eine Übermittlungseinheit (15), die derart ausgebildet ist, die mindestens eine Liste und den Integritätswert einer zweiten Vorrichtung (2) bereitzustellen.

11. Erste Vorrichtung (1) nach Anspruch 10, wobei die erste Vorrichtung (1) als Software-Implementierung oder als Hardware-Komponente realisiert ist und derart ausgebildet ist, das Verfahren gemäß Anspruch 1 bis 9 auszuführen.

12. Zweite Vorrichtung (2) umfassend:
- eine Empfangseinheit (20), die derart ausgebildet ist, die mindestens eine Liste und den einen Integritätswert einer ersten Vorrichtung (1) zu empfangen
und
- eine Prüfeinheit (21), die derart ausgebildet ist, anhand mindestens einer Liste, die mindestens eine Messinformation und mindestens einen Messwert umfasst, und einem Integritätswert die Integrität und/oder Konfiguration einer ersten Vorrichtung (1) gegenüber einer Prüfinformation zu prüfen.

13. System umfassend eine erste Vorrichtung (1) nach den Ansprüchen 10 oder 11 und eine zweite Vorrichtung (2) nach Anspruch 12, die miteinander über eine Kommunikationsverbindung (C) verbunden sind, wobei das System derart ausgebildet ist, die Schritte des Verfahrens nach einem der Ansprüche 1 bis 9 durchzuführen.

14. Computerprogrammprodukt, das direkt in einen programmierbaren Computer ladbar ist, umfassend Programmcodeteile, die dazu geeignet sind, die Schritte des Verfahrens nach einem der Ansprüche 1 bis 9 durchzuführen.
